# EUROPEAN PATENT APPLICATION

(11) **EP 2 287 999 A2**
(43) Date of publication of application: **23.02.2011**
(21) Application number: 10251445.2
(22) Date of filing: 13.08.2010
(51) Int. Cl.: H02K 9/19, H02K 7/18

(54) **Electric generator driven by combustion engine and having fluid cooling**

(30) Priority: 19.08.2009 US 543589
(71) Applicant: Hamilton Sundstrand Corporation, Windsor Locks, CT 06096-1010 (US)
(72) Inventor: Winter, Curt B., Franklin, Wisconsin 53132 (US); Dickes, Gary E., Kenosha, Wisconsin 53144 (US)
(74) Representative: Tomlinson, Kerry John

(57) **Abstract**

A combustion engine driven electrical generator includes a generator shaft (30) to be driven by a combustion engine shaft (24;224). The generator shaft rotates near stator windings (140). An electrical terminal connection (28;228) delivers generated electricity to a user. A cooling fluid circuit provides flooded cooling fluid to the stator (140) and rotor (142) windings. The oil or cooling fluid circuit takes hot cooling fluid from the generator and passes the hot cooling fluid through a cooler heat exchanger (38;252), and then back into the generator housing.

## Description

### BACKGROUND OF THE INVENTION

This application relates to a generator cooling system wherein a circuit passes flooded cooling fluid across the generator components, and wherein the generator components are driven by a combustion engine.

Generators are known, and have a generator shaft driven to rotate by a source of rotation. One known type of generator is driven by a combustion engine, such as a diesel engine. These generators have a generator shaft driven by an engine shaft, and with electrical powered windings or permanent magnets that rotate with the generator shaft. The rotor rotates in proximity to stator windings, and electricity is generated by the relative rotation. Such generators are utilized as a source of electricity in many locations where there is no standard source of electricity.

In the past, generators have been cooled such as by a fan blowing cooling air across the rotor and stator windings. The cooling air may carry impurities, such as dust or dirt, and has sometimes raised challenges to the operation of the generator.

### SUMMARY OF THE INVENTION

A combustion engine driven electrical generator includes a generator shaft to be driven by a combustion engine shaft. The generator shaft rotates with rotor electrical powered windings or permanent magnets. Stator windings are placed adjacent to the rotor. An electrical terminal connection delivers generated electricity to a user. A cooling fluid circuit provides cooling fluid to the flooded stator and rotor. The cooling fluid circuit takes hot cooling fluid from the generator and passes the hot cooling fluid through a cooler heat exchanger, and then back into the generator housing. Another cooling fluid circuit option is to use an engine cooling fluid pumped through the flooded generator and returned to the engine oil pan reservoir.

In addition, the combination of a generator with an internal combustion engine is disclosed and claimed, as is a method of operating such a generator.

These and other features of the present invention can be best understood from the following specification and drawings, the following of which is a brief description.

### BRIEF DESCRIPTION OF THE DRAWINGS

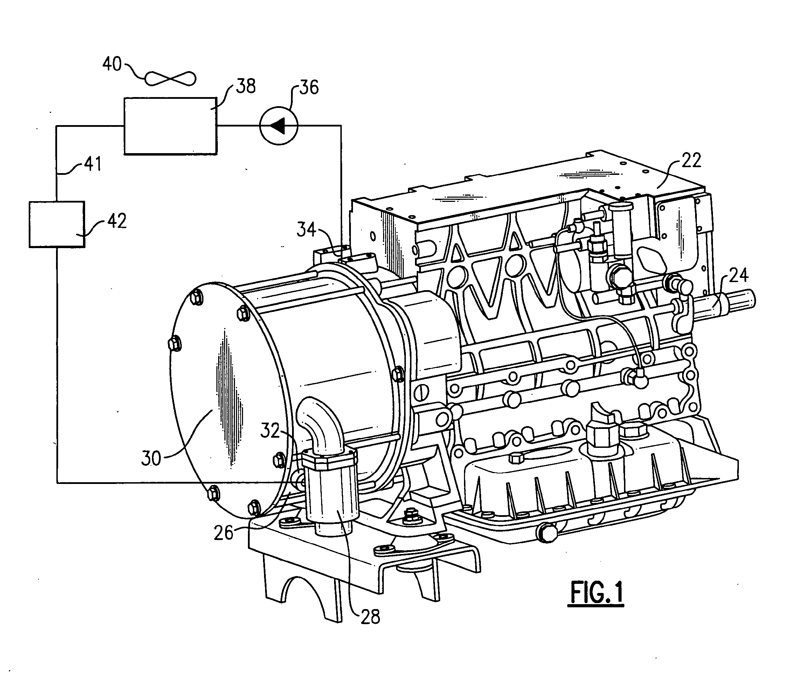

Figure 1 shows a generator and engine.
Figure 2 is a section view through a portion of the Figure 1 generator.
Figure 3 shows another embodiment

### DETAILED DESCRIPTION OF THE PREFERRED EMBODIMENT

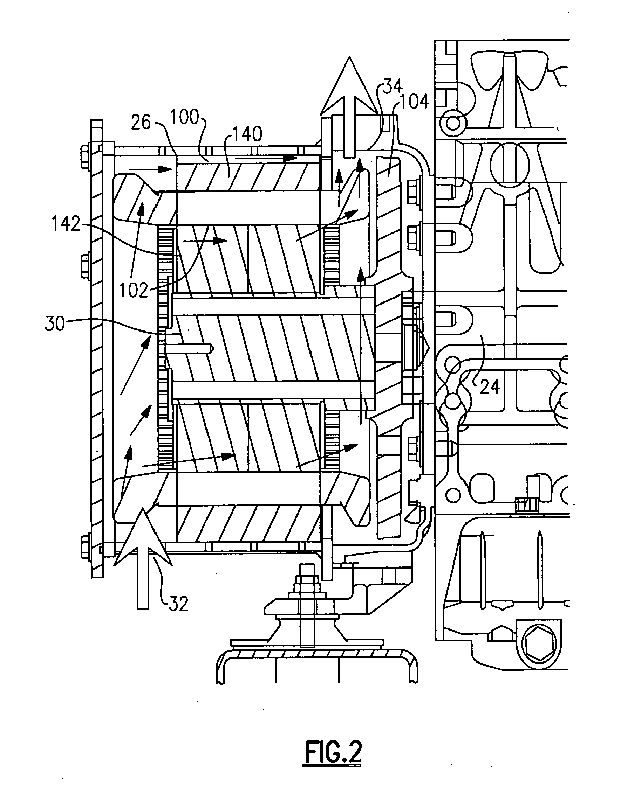

An internal combustion engine 22, such as a diesel engine, drives an engine shaft 24, as known. Engine shaft 24 directly drives a generator shaft 30 within a generator housing 26 (see Figure 2).

As the generator shaft 30 rotates, electricity is generated and may be utilized through electric power leads such as from electrical terminals in a terminal box 28. The device as disclosed to this point may be as known in the art.

Oil is circulated within the generator housing 26. As shown, an oil outlet 34 takes away hot oil, and may include a pump 36 for moving the oil through an oil cooler heat exchanger 38. Oil cooler 38 is provided with a fan 40 to blow cooling air across the heat exchanger 38 to cool the oil. A filter 42 may also be included into an oil or cooling fluid circuit 41. The cooled oil is returned to the interior of the housing 26 through an oil inlet 32.

As shown in Figure 2, the generator shaft 30 drives a rotor 142 adjacent to stator 140. The rotor 142 carries electrical powered windings or permanent magnets, as known. As shown, in the oil inlet 32 will deliver the cooled oil into a location where it can cool the rotor 142 and stator 140.

As can be appreciated from Figure 2, the cooling oil flows into the bottom of the generator through inlet 32, floods the stator windings, travels axially inwardly through a rotating rotor air gap 102, and between a stator inner diameter and a stator back iron 104. The oil comes into one side of the generator rotor and stator, passes axially along those components, and then exits vertically upwardly through the exit 34.

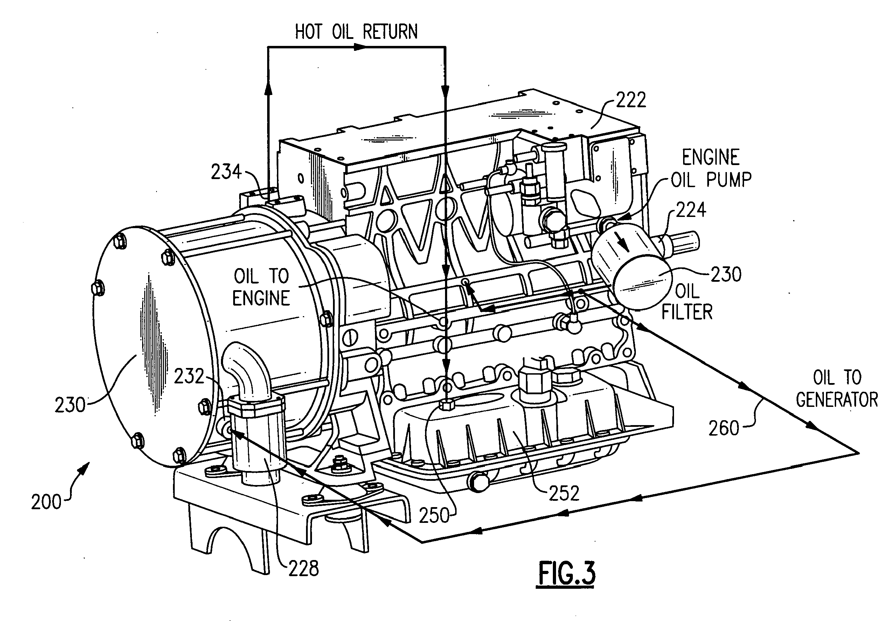

As shown in Figure 3, another embodiment 200 includes a generator 230 having an oil inlet 232 and an oil outlet 234. A power outlet 228 is provided as in the earlier embodiment. The hot oil returns from outlet 234 to an inlet 250 into an engine oil pan 252, in which it is cooled. An oil pump is shown on the engine 222, and delivers oil through a filter 230, and potentially through a second filter 232 back into an oil cooling line in the engine 222. However, a portion of the oil is tapped through branch line 260 and delivered to the inlet 232. In this manner, a single oil supply circuit provides oil to both the engine and the generator. In this embodiment, the interior of the generator 230 may be similar to the Figure 2 interior as to the oil flow path.

While oil is specifically disclosed as the cooling fluid in the two embodiments, alternative cooling fluids may be utilized, particularly in the first embodiment. Further, while the invention is disclosed as a generator, the generator may also be utilized as a starter motor for the engine in certain applications. In disclosed embodiments, the amount of oil delivered into the generator is selected such that the stator and rotor are flooded by oil, rather than spray-cooled.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A generator for use in a combustion engine driven electrical generator comprising:
a generator shaft (30) to be driven by a combustion engine shaft (24;224);
said generator shaft rotating with a rotor (142);
stator windings (140) placed adjacent to said rotor ;
an electrical terminal box (28;228) to deliver generated electricity to a user; and
a cooling fluid circuit (41) for providing cooling fluid to the stator and rotor, said circuit taking hot cooling fluid from said generator and passing the hot cooling fluid through a cooler heat exchanger (38;252), and then back into a generator housing (26).

2. The generator as set forth in claim 1, wherein a fan (40) passes cooling air over said heat exchanger (38).

3. The generator as set forth in claim 1 or 2, wherein a pump (36;224) moves the cooling fluid from an outlet (34;234) and through the heat exchanger (38;252), and back into an inlet (32;232) in the housing.

4. The generator as set forth in claim 1, 2 or 3, wherein said circuit (41) provides cooling fluid through an inlet (32;232) at one axial side of the rotor and stator, passes along an axial length of the rotor and stator, and then exits the housing (26) from an opposed axial side.

5. The generator as set forth in claim 1, 2, 3 or 4, wherein said circuit is arranged to receive a cooling fluid from the combustion engine that is driving the generator shaft, and the cooling fluid is oil.

6. The generator as set forth in any preceding claim, wherein a filter (42;230) filters the cooling fluid prior to its being returned to the housing.

7. A combination generator and combustion engine comprising:
a combustion engine (22;222) having an engine shaft (24;224) driven to rotate by the engine; and
a generator as claimed in any preceding claim having a generator shaft to be driven by said engine shaft.

8. The combination generator and combustion engine as set forth in claim 7, wherein said combustion engine is a diesel engine.

9. The combination generator and combustion engine as set forth in claim 7 or 8, wherein said cooling fluid circuit circulates oil from said engine, where the cooler heat exchanger is located, and to said generator.

10. The combination generator and combustion engine as set forth in claim 9, wherein said engine is provided with an oil pump, and oil moving from an engine oil pan (252), driven by said oil pump, and through a filter (230) before passing to said generator.

11. A method of operating an engine driven generator comprising the steps of:
generating rotation of an engine shaft (24;224) by a combustion operation;
connecting said engine shaft to a generator shaft (30) and causing said generator shaft to rotate;
rotation of said generator shaft generating electricity, and providing a connection (28;228) for use of the generated electricity; and
circulating a cooling fluid through a generator housing (26) to cool components of the generator and from the generator housing through a heat exchanger (38;252) to cool the cooling fluid.

12. The method as set forth in claim 11, wherein a fan (40) passes cooling air over said heat exchanger (38).
